Europäisches Patentamt

(19) European Patent Office

Office européen des brevets

(11) Numéro de publication : **0 337 909 B1**

(12) # FASCICULE DE BREVET EUROPEEN

(45) Date de publication du fascicule du brevet :
**27.11.91 Bulletin 91/48**

(51) Int. Cl.⁵ : **A01D 34/66**

(21) Numéro de dépôt : **89440022.5**

(22) Date de dépôt : **14.03.89**

(54) **Faucheuse à entraînement direct.**

(30) Priorité : **15.03.88 FR 8803491**

(43) Date de publication de la demande :
**18.10.89 Bulletin 89/42**

(45) Mention de la délivrance du brevet :
**27.11.91 Bulletin 91/48**

(84) Etats contractants désignés :
**AT CH DE ES FR GB IT LI NL**

(56) Documents cités :
**EP-A- 0 070 585**
**EP-A- 0 165 039**
**EP-A- 0 184 155**
**DE-A- 1 900 165**
**FR-A- 2 255 839**
**US-A- 3 115 738**

(73) Titulaire : **KUHN S.A.**
**4, Impasse des Fabriques**
**F-67700 Saverne (FR)**

(72) Inventeur : **Neuerburg, Horst, M.**
**6, rue des Aubépines**
**F-67700 Saverne (FR)**

Jouve, 18, rue Saint-Denis, 75001 PARIS

## Description

La présente invention concerne une faucheuse comportant un châssis permettant d'atteler ladite faucheuse à un véhicule tracteur et un groupe de fauche lié audit châssis par une articulation d'axe dirigé sensiblement suivant la direction d'avance, ledit groupe de fauche étant muni d'au moins un organe de coupe et d'au moins un rotor agencé près de l'extrémité dudit groupe de fauche où celui-ci est lié audit châssis, ledit rotor s'étendant en partie au moins au-dessus d'une partie dudit ou desdits organes de coupe et tournant autour d'un premier axe dirigé vers le haut, ladite faucheuse comportant également des organes d'entraînement du ou desdits organes de coupe et du rotor comprenant notamment un arbre d'entraînement en au moins une partie pénétrant dans ledit rotor et tournant sensiblement autour du premier axe, et un couple de roues dentées coniques agencé au sommet de l'arbre d'entraînement, la première roue dentée ayant pour axe de rotation le premier axe, la deuxième roue dentée ayant pour axe de rotation un deuxième axe ladite faucheuse comportant par ailleurs un organe de manoeuvre permettant par pivotement autour de l'articulation d'axe dirigé sensiblement dans la direction d'avance d'amener le groupe de fauche dans une position de transport dans laquelle le groupe de fauche est dirigé vers le haut.

Dans la FR-A-2255839 est décrite une telle faucheuse dont le groupe de fauche comporte une barre de coupe munie de six disques tournant autour d'axes dirigés vers le haut. Les disques s'étendant à chaque extrémité de la barre de coupe sont surmontés par un rotor. Cette faucheuse connue comporte par ailleurs un châssis permettant de l'atteler à un véhicule tracteur. Le groupe de fauche est lié à ce châssis au moyen d'une articulation d'axe dirigé sensiblement suivant la direction d'avance. A cet effet, le châssis est muni d'une chape à laquelle est lié de manière articulée un organe-support faisant partie du groupe de fauche. Cet organe-support comporte un pied s'étendant sensiblement horizontalement à l'extrémité arrière duquel est fixée une jambe s'étendant sensiblement verticalement. Le pied est fixé par son extrémité avant à la barre de coupe et la jambe est liée à son extrémité supérieure au châssis par l'articulation d'axe dirigé sensiblement suivant la direction d'avance. Cet organe-support s'étend en vue de dessus entièrement derrière le premier disque. Les disques et les rotors de cette faucheuse connue sont entraînés en rotation par un arbre d'entraînement traversant le rotor surmontant le premier disque. Cet arbre d'entraînement comporte deux parties liées entre elles par un accouplement élastique. A sa partie inférieure, l'arbre d'entraînement est lié en rotation d'une part au premier disque et au rotor surmontant celui-ci, et d'autre part à une roue dentée cylindrique logée dans un carter de la barre de coupe. Cette roue dentée cylindrique transmet le mouvement à une cascade d'autres roues dentées cylindriques également logées dans le carter de la barre de coupe et assurant l'entraînement en rotation des autres disques et de l'autre rotor. L'arbre d'entraînement est lui-même entraîné en rotation par un arbre dont l'axe de rotation est confondu avec l'axe de l'articulation liant le groupe de fauche au châssis et par un couple de roues dentées coniques s'étendant au sommet de l'arbre d'entraînement et le liant en rotation audit arbre. Cet arbre est quant à lui entraîné en rotation par la prise de force du véhicule tracteur par l'intermédiaire d'un dispositif à arbre à cardans et à poulies-courroies. Cette faucheuse connue comporte aussi un vérin hydraulique fixé entre le châssis et le groupe de fauche en vue d'amener le groupe de fauche par pivotement autour de l'articulation dans une position de transport dans laquelle le groupe de fauche s'étend vers le haut.

Cette faucheuse connue présente la particularité d'avoir un groupe de fauche dont la largeur hors-tout au niveau du sol est égale à la largeur de coupe. Ceci est avantageux à plusieurs égards. En effet, lors du premier passage le groupe de fauche ne plie pas de produit à récolter sans le couper. Par ailleurs, lors des passages ultérieurs il n'y a pas lieu de dégager de bandes de sol plus larges que celles nécessaires aux roues du véhicule tracteur s'étendant en regard de la barre de coupe. Comme il n'y a pas de partie du groupe de fauche qui dépasse au niveau du sol la largeur de coupe, on élimine les risques de bourrage dus à des accrochages de produit coupé à une telle partie.

Au transport, cette faucheuse connue présente cependant l'inconvénient de dépasser largement la largeur hors-tout du véhicule tracteur. Ceci est dû notamment au fait que l'axe de l'articulation liant le groupe de fauche au châssis s'étend au-dessus du rotor surmontant le premier disque, c'est-à-dire à une hauteur relativement importante par rapport au sol. Ainsi, lorsque le groupe de fauche est pivoté dans sa position de transport dans laquelle il s'étend sensiblement verticalement, le groupe de fauche s'étend latéralement au-delà de l'articulation d'une distance égale à la valeur de ladite hauteur. Ceci augmente donc substantiellement la largeur hors-tout de l'ensemble véhicule tracteur-faucheuse et peut poser des problèmes pour passer dans des chemins étroits ou par certains portails d'entrée de fermes. Ceci pose aussi des problèmes de visibilité lors de manoeuvres. Comme le centre de gravité du groupe de fauche est relativement déporté latéralement, le châssis de la faucheuse et le dispositif d'attelage du véhicule tracteur sont substantiellement sollicités. En sus, les roues du véhicule tracteur s'étendant du côté opposé à celui où s'étend le groupe de fauche, sont substantiellement déchargées, ce qui peut poser des problèmes de stabilité pour des véhicules tracteurs de faible puissance. Le but de la présente invention est de solutionner ce problème.

A cet effet, la faucheuse selon la présente invention est caractérisée par le fait que l'axe de l'articulation liant le groupe de fauche au châssis s'étend plus bas que le sommet du couple de roues dentées coniques défini par l'intersection dudit premier axe et dudit deuxième axe.

Avec cet agencement, la hauteur à laquelle s'étend l'axe de l'articulation liant le groupe de fauche au châssis, est plus faible. En conséquence, lorsque le groupe de fauche est pivoté dans sa position de transport, celui-ci s'étend latéralement au-delà de l'axe de l'articulation d'une distance plus faible, tandis que sa partie qui s'étendait au travail plus haut que l'axe de l'articulation, est passée de l'autre côté dudit axe vers le véhicule tracteur. De ce fait, la largeur hors-tout de l'ensemble véhicule tracteur-faucheuse est plus réduit. Par ailleurs, le centre de gravité du groupe de fauche s'étend plus près de l'axe médian du véhicule tracteur, ce qui sollicite moins le châssis de la faucheuse et le dispositif d'attelage du véhicule tracteur et déleste moins les roues du véhicule tracteur s'étendant du côté opposé à celui où s'étend le groupe de fauche.

Préférentiellement, l'axe de l'articulation liant le groupe de fauche au châssis est en sus déporté vers le véhicule tracteur. Ceci permet encore de ramener d'avantage le groupe de fauche vers le véhicule tracteur lors de son pivotement dans la position de transport.

Avantageusement, il est prévu dans l'invention que l'axe de l'articulation liant le groupe de fauche au châssis s'étend sensiblement à mi-distance entre l'organe de coupe au-dessus duquel s'étend au moins partiellement le rotor et le sommet du couple de roues dentées coniques agencé au sommet de l'arbre d'entraînement pénétrant dans ledit rotor. Cette caractéristique est particulièrement intéressante lorsque l'axe de l'articulation est en sus déporté vers le véhicule tracteur. Dans ce cas en effet, l'articulation peut s'étendre au-delà de la largeur de coupe. Or, avec cette caractéristique, on peut notamment éviter que l'articulation ne vienne en contact avec l'andain de produit coupé formé au passage précédent, tout en conservant une largeur hors-tout raisonnable à l'ensemble véhicule tracteur-faucheuse.

La réalisation de l'axe d'articulation est particulièrement aisée lorsqu'à l'extrémité du groupe de fauche où celui-ci est lié au châssis, ledit groupe de fauche est muni d'un organe-support par l'intermédiaire duquel le groupe de fauche est lié au châssis. Dans l'invention, cet organe-support comporte un palier définissant l'articulation, une jambe s'étendant à partir de ce palier vers le bas et liée à son pied à un organe porteur inférieur du groupe de fauche, et un bras s'étendant à partir du palier vers le haut et lié à sa partie supérieure à un carter de renvoi dans lequel s'étend le couple de roues dentées coniques agencé au sommet de l'arbre d'entraînement.

Avantageusement, au moins le pied de la jambe de l'organe-support s'étend sensiblement à l'intérieur de la largeur de coupe.

Selon une caractéristique supplémentaire, il est également prévu dans l'invention que les organes d'entraînement comportent en sus un arbre guidé en rotation dans le palier de l'organe-support et tournant autour de l'axe de l'articulation, un autre couple de roues dentées coniques lié en rotation audit arbre, et un arbre intermédiaire lié en rotation à cet autre couple de roues dentées coniques et au couple de roues dentées coniques agencé au sommet de l'arbre d'entraînement.

Avantageusement, cet arbre intermédiaire s'étend à l'intérieur du bras de l'organe-support.

Selon une autre caractéristique, il est également prévu dans l'invention que le groupe de fauche comporte une barre de coupe munie dudit organe de coupe ou d'une partie au moins desdits organes de coupe, ladite barre de coupe étant portée par la structure porteuse composée au moins par l'organe-support et l'organe porteur inférieur du groupe de fauche.

D'autres caractéristiques de l'invention sont contenues dans les autres sous-revendications et ressortent clairement de la description ci-dessous d'un exemple préféré (mais non-limitatif) de réalisation de l'invention faite en référence au dessin annexé sur lequel :

— la figure 1 représente, en position de travail, une faucheuse selon l'invention vue de l'arrière dans le sens d'avance et attelée à un véhicule-tracteur,

— la figure 2 représente à une échelle agrandie une vue de dessus de la liaison du groupe de fauche au châssis,

— la figure 3 représente à une échelle agrandie une vue latérale du groupe de fauche seul,

— la figure 4 représente à une échelle agrandie une vue en coupe suivant le plan IV-IV défini sur la figure 2, et

— la figure 5 représente la faucheuse pivotée en position de transport.

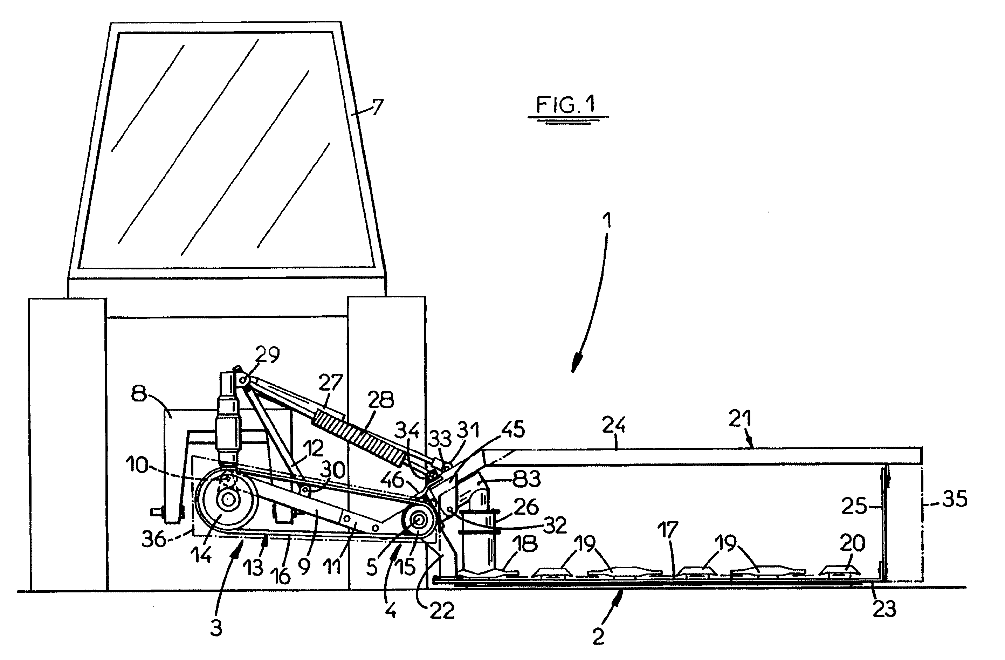

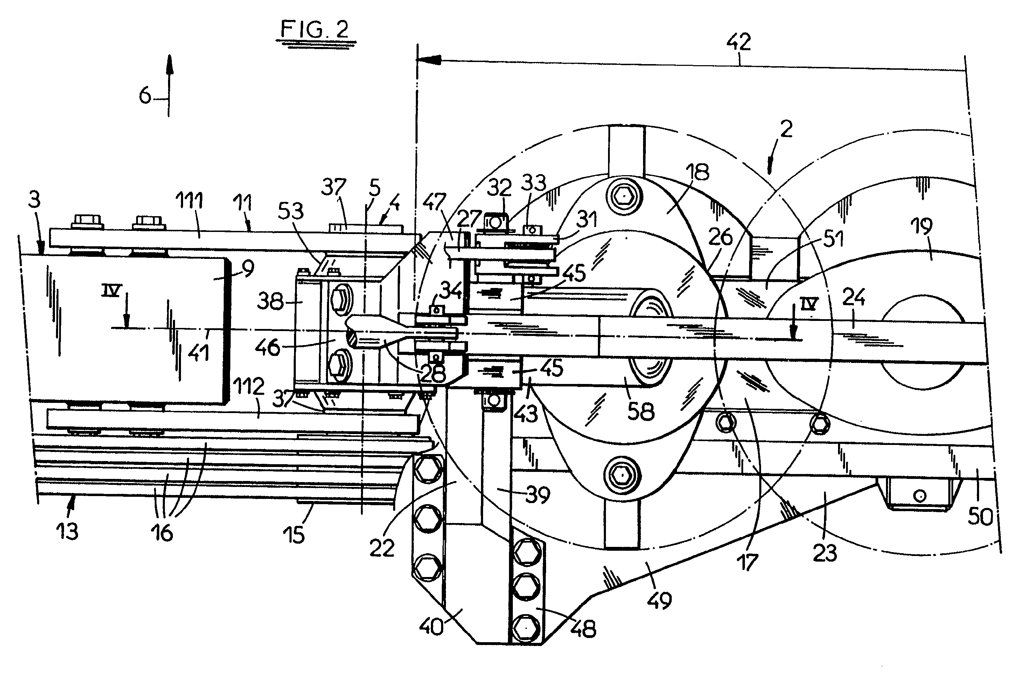

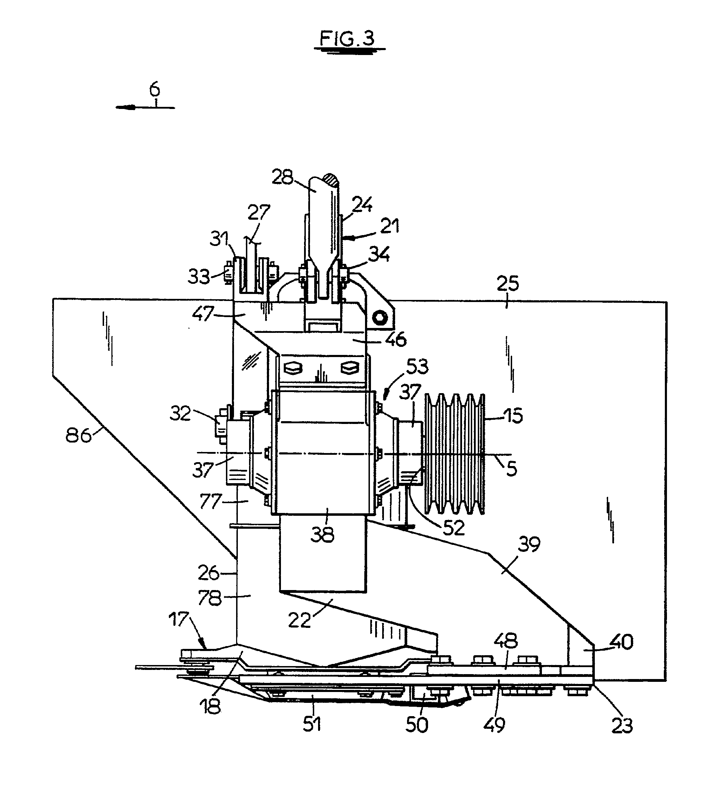

La faucheuse (1) selon l'invention, telle qu'elle est représentée sur la figure 1, comporte un groupe de fauche (2) et un châssis (3). Le groupe de fauche (2) est lié au châssis (3) par une articulation (4) d'axe (5) dirigé suivant la direction d'avance (6) définie sur les figures 2 et 3.

Au travail, la faucheuse (1) est attelée au dispositif d'attelage d'un véhicule tracteur (7) de telle sorte que le groupe de fauche (2) s'étend, faucheuse (1) vue dans la direction d'avance (6), latéralement à côté de la voie du véhicule tracteur (7) et transversalement à la direction d'avance (6). A cet effet, le châssis (3) est muni d'un dispositif d'attelage (8) destiné à être accouplé au dispositif d'attelage du véhicule tracteur (7). Le châssis (3) comporte par ailleurs un bras-support (9) lié à l'une de ses extrémités au dispositif d'attelage (8) au moyen d'une articulation (10) d'axe dirigé suivant la direction d'avance (6). Le bras-support (9) s'étend transversalement à la direction d'avance (6) et est lié à son autre extrémité au groupe de fauche (2) au moyen de l'articulation (4). A cet effet, le bras-support (9) est muni à cette autre extrémité d'une chape (11).

Entre le dispositif d'attelage (8) et le bras-support (9) s'étend également un organe de limitation de débattement (12) limitant le débattement possible du bras-support (9) par rapport au dispositif d'attelage (8). Cet organe de limitation de débattement (12) limite notamment le pivotement du bras-support (9) vers le bas autour de l'articulation (10). Dans l'exemple représenté, cet organe de limitation de débattement (12) est réalisé sous forme de tirant muni d'un trou oblong.

Le châssis (3) supporte également une partie des organes de transmission (13) transmettant le mouvement depuis la prise de force (non représentée) du véhicule tracteur (7) aux organes d'entraînement (qui seront décrits ultérieurement) du groupe de fauche (2). Dans l'exemple représenté, ces organes de transmission (13) sont constitués par un arbre de transmission à cardans (non représenté) qui est lié en rotation à une première poulie (14) fixée au bras-support (9) et ayant un axe de rotation dirigé suivant la direction d'avance (6), une seconde poulie (15) dont l'axe de rotation est confondu avec l'axe (5) de l'articulation (4), et un organe de transmission sans fin (16) s'enroulant sur les deux poulies (14, 15).

Le groupe de fauche (2) comporte une barre de coupe (17) munie d'organes de coupe (18, 19, 20). Dans l'exemple représenté, les organes de coupe (18, 19, 20) sont constitués par des disques munis à leur périphérie d'outils de coupe et tournant autour d'axes dirigés vers le haut. Le groupe de fauche (2) comporte par ailleurs une structure porteuse (21) qui supporte la barre de coupe (17). Cette structure porteuse (21) se compose d'un organe-support (22), d'un organe porteur inférieur (23), d'un organe porteur supérieur (24) et d'un organe de liaison (25). L'organe porteur inférieur (23) et l'organe porteur supérieur (24) sont liés entre eux d'une part par l'intermédiaire de l'organe-support (22) s'étendant à l'extrémité du groupe de fauche (2) proche du véhicule tracteur (7), et d'autre part par l'intermédiaire de l'organe de liaison (25) aménagé à l'autre extrémité du groupe de fauche (2). L'organe-support (22) s'étend entre les deux ailes (111, 112) (figure 2) de la chape (11) du bras-support (9) et forme avec cette chape (11) l'articulation (4) liant le groupe de fauche (2) à l'extrémité du bras-support (9) éloignée du dispositif d'attelage (8).

Comme visible sur la figure 1, cette articulation (4) est déportée vers le véhicule tracteur (7) et s'étend à côté de l'organe de coupe (18) le plus près de l'organe-support (22) et du rotor (26). On voit en sus sur la figure 1, que l'axe (5) de l'articulation (4) s'étend, faucheuse (1) vue dans la direction d'avance (6), sensiblement au niveau de la partie extérieure de la roue arrière du véhicule-tracteur (7) s'étendant en regard du groupe de fauche (2).

L'organe-support (22) contient en sus une partie des organes d'entraînement destinés notamment à l'entraînement des organes de coupe (18, 19, 20). Ces organes d'entraînement seront décrits ultérieurement plus en détail. Sur la figure 1, on voit simplement qu'une partie de ceux-ci s'étendent à travers l'organe de coupe (18) s'étendant le plus près du véhicule tracteur (7). C'est en partie à cet effet, que cet organe de coupe (18) est surmonté par un rotor (26) qui tourne également autour d'un axe dirigé vers le haut. Dans l'exemple représenté, le rotor (26) tourne à la même vitesse et autour du même axe que l'organe de coupe (18) qu'il surmonte.

La faucheuse (1) de la présente invention est ainsi ce que l'on appelle une faucheuse à entraînement direct. Dans une telle faucheuse, la largeur de coupe du groupe de fauche (2) est sensiblement égale à la largeur hors-tout dudit groupe de fauche (2) mesurée au niveau du sol.

L'organe de liaison (25) quant à lui remplit dans l'exemple représenté également une fonction de séparation entre le produit coupé par l'organe de coupe (20) qui s'étend le plus près de lui et le produit encore sur pied.

Entre le dispositif d'attelage (8) et le groupe de fauche (2) sont aménagés un organe de manoeuvre (27) et un organe de délestage (28) du groupe de fauche (2). Dans l'exemple représenté, l'organe de manoeuvre (27) est un vérin hydraulique et l'organe de délestage (28), un ressort de traction. Dans l'exemple représenté, on voit également que l'organe de manoeuvre (27) et l'organe de délestage (28) sont liés au dispositif d'attelage (8) à l'aide du même axe (29) que celui qui lie l'organe de limitation de débattement (12) audit dispositif d'attelage (8). Cet organe de limitation de débattement (12) est par ailleurs lié au bras-support (9) par un axe (30). L'organe de manoeuvre (27) quant à lui, est lié au groupe de fauche (2) par l'intermédiaire d'un levier (31) qui est lié au groupe de fauche (2) par un axe (32) et à l'organe de manoeuvre (27) par un axe (33). L'organe de délestage (28) enfin est lié au groupe de fauche (2) par un axe (34). Les axes (29, 30, 32, 33 et 34) sont dirigés suivant la direction d'avance (6).

Sur la figure 1, on voit enfin encore que le groupe de fauche (2) comporte un dispositif de protection (35) (représenté en traits mixtes) qui entoure les organes de coupe (18, 19, 20). Le châssis (3) quant à lui est muni d'un capot de protection (36) (également représenté en traits mixtes) qui entoure partiellement les poulies (14, 15) et l'organe de transmission sans fin (16).

Sur les figures 2 à 4, on a représenté plus en détail, la liaison du groupe de fauche (2) au châssis (3) ainsi que la manière selon laquelle sont entraînés les organes de coupe (18, 19, 20) de la barre de coupe (17) du groupe de fauche (2).

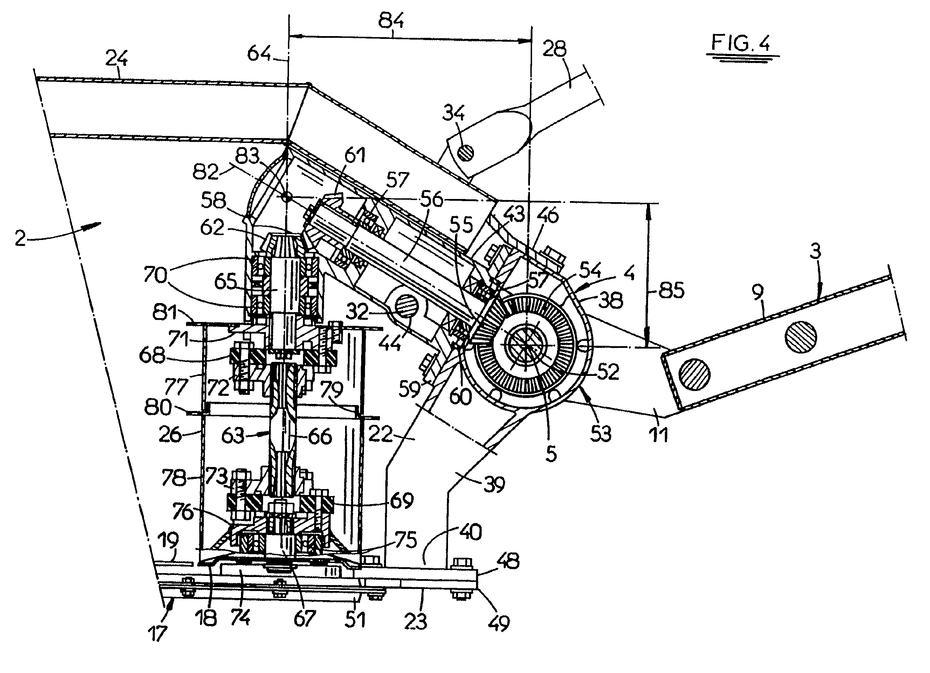

Comme dit plus haut, l'organe-support (22) forme avec la chape (11) du bras-support (9) l'articulation (4). A cet effet, l'organe-support (22) comporte deux portées cylindriques (37) susceptibles de tourner dans les ailes (111, 112) de la chape (11). Ces portées cylindriques (37) sont réalisées sous forme de flasques qui sont montés sur un boîtier (38) que comporte également l'organe-support (22). L'organe-support (22) comporte enfin encore une jambe (39) qui s'étend à partir du boîtier (38) vers le bas en direction de l'organe porteur inférieur (23). Cette jambe (39) comporte un pied (40) par l'intermédiaire duquel l'organe-support (22) est lié à l'organe porteur inférieur (23). Sur les figures 2 et 3, on voit que le boîtier (38) s'étend sensiblement symétriquement par rapport au plan longitudinal (41) (figure 2) du groupe de fauche (2) tandis que le pied (40) de la jambe (39) s'étend derrière ce plan (41). De ce fait, la jambe (39) s'étend à partir du boîtier (38) vers l'arrière et vers le bas. Sur les figures 2 et 4, on voit en sus que le boîtier (38) s'étend en vue de dessus pour l'essentiel en-dehors de la zone de coupe (42) des organes de coupe (18, 19, 20) alors que le pied (40) de la jambe (39) s'étend à l'intérieur de cette zone de coupe (42). Pour ce faire, la jambe (39) s'étend également en partie à partir du boîtier (38) vers la partie médiane du groupe de fauche (2). Dans l'exemple représenté, on voit en sus que le pied (40) s'étend derrière l'organe de coupe (18) situé à côté de l'organe-support (22) et qu'une grande partie de la jambe (39) s'étend au-dessus dudit organe de coupe (18) et à côté du rotor (26) surmontant cet organe de coupe (18). L'organe-support (22) comporte aussi un bras (43) qui s'étend à partir du boîtier (38) vers le haut et vers la partie médiane du groupe de fauche (2). Ce bras (43) comporte un alésage (44) dans lequel est introduit l'axe (32) par l'intermédiaire duquel est lié le levier (31) au groupe de fauche (2).

Mais cet axe (32) sert également à lier l'organe-porteur supérieur (24) à l'organe-support (22). Cet organe porteur supérieur (24) est constitué par un tube s'étendant sensiblement dans le plan longitudinal (41) du groupe de fauche (2) et sur une grande partie de sa longueur parallèlement à la barre de coupe (17) et à une certaine distance au-dessus de celle-ci. A son extrémité proche de l'organe-support (22) par contre, il s'étend sensiblement parallèlement au bras (43). A cette extrémité, l'organe porteur supérieur (24) comporte deux ailes (45) formant une chape à l'intérieur de laquelle s'étend le bras (43) et qui est liée à ce bras (43) au moyen de l'axe (32). A cette extrémité, l'organe porteur supérieur (24) est également muni d'une plaque de liaison (46) par l'intermédiaire de laquelle il est vissé au boîtier (38) de l'organe-support (22). L'organe porteur supérieur (24) est ainsi lié de manière démontable à l'organe-support (22).

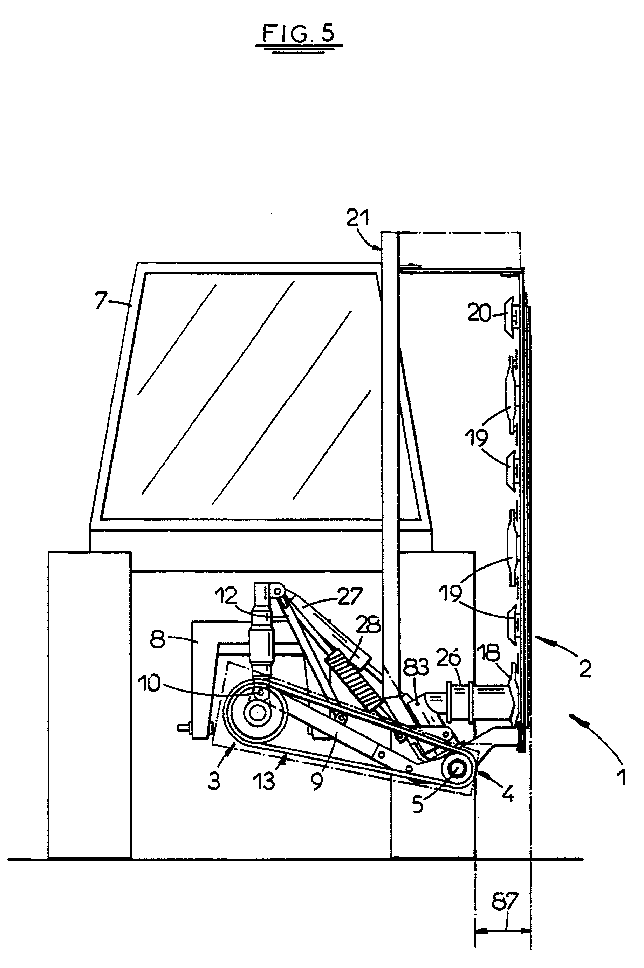

Sur les figures 2 et 3, on voit que la plaque de liaison (46) est dissymétrique et comporte une butée (47) s'étendant dans la zone de pivotement du levier (31). En position de travail, le levier (31) est éloigné de la butée (47), ce qui permet au groupe de fauche (2) de s'adapter à la surface du sol en pivotant d'une certaine valeur autour de l'articulation (4). Lorsqu'on actionne l'organe de manoeuvre (27) pour faire pivoter le groupe de fauche (2) vers le haut en vue de l'amener dans une position de transport (figure 5), le pivotement du groupe de fauche (2) ne débutera que lorsque le levier (31) sera arrivé en contact avec la butée (47).

Comme dit plus haut, l'organe-support (22) est lié par l'intermédiaire du pied (40) de la jambe (39) à l'organe porteur inférieur (23). A cet effet, le pied (40) de la jambe (39) de l'organe-support (22) comprend une bride (48) par l'intermédiaire de laquelle l'organe-support (22) est vissé à une plaque porteuse (49) de l'organe porteur inférieur (23). Cette plaque porteuse (49) est fixée à un raidisseur (50) qui s'étend derrière la barre de coupe (17) laquelle comporte un carter (51) au-dessus duquel s'étendent les organes de coupe (18, 19, 20). Le raidisseur (50) est constitué par un tube s'étendant parallèlement audit carter (51). A leur autre extrémité, l'organe porteur inférieur (23) et l'organe porteur supérieur (24) sont liés de manière amovible à l'organe de liaison (25). La structure porteuse (21) ainsi formée, porte la barre de coupe (17) dont le carter (51) est vissé à l'organe porteur inférieur (23) qui s'étend en-dessous du plan de coupe des organes de coupe (18, 19, 20).

Sur les figures 2 à 4 apparaissent les organes d'entraînement des organes de coupe (18, 19, 20) et du rotor (26) qui reçoivent le mouvement des organes de transmission (13).

Ces organes d'entraînement comportent un arbre (52) guidé en rotation dans les portées cylindriques (37) du boîtier (38) de l'organe-support (22). L'axe de rotation de cet arbre (52) est ainsi confondu avec l'axe (5) de l'articulation (4). Le guidage en rotation de cet arbre (52) dans le palier (53) formé par les portées cylindriques (37) et le boîtier (38), est à la portée de l'homme de l'art. La poulie (15) est liée en rotation à l'extrémité arrière de l'arbre (52) qui sort à cet effet du palier (53).

A l'intérieur du palier (53), l'arbre (52) est lié en rotation à une roue dentée conique (54) qui engrène avec une roue dentée conique (55). Cette dernière roue dentée conique (55) est liée en rotation à une extrémité d'un arbre intermédiaire (56) qui est guidé en rotation dans le bras (43) au moyen de roulements (57). A son autre extrémité, l'arbre intermédiaire (56), pénètre dans un carter de renvoi (58) s'étendant au-dessus de l'organe de coupe (18) et du rotor (26).

Dans l'exemple représenté, ce carter de renvoi (58) et le bras (43) sont formés par une seule pièce. A son extrémité en regard du boîtier (38), le bras (43) comporte une bride (59) qui permet le vissage de l'ensemble carter de renvoi (58) — bras (43) sur le boîtier (38). Afin que la roue dentée conique (55) qui est guidée en rotation dans le bras (43), soit correctement positionnée par rapport à la roue dentée conique (54) guidée en rotation dans le boîtier (38), une bague de centrage (60) centre le bras (43) par rapport au boîtier (38).

A l'intérieur du carter de renvoi (58), l'arbre intermédiaire (56) est lié en rotation à une roue dentée conique (61) qui engrène avec une roue dentée conique (62). Cette dernière roue dentée conique (62) est liée en rotation à un arbre d'entraînement (63) dont l'axe de rotation (64) est confondu avec l'axe de rotation de l'organe de coupe (18) et du rotor (26) surmontant cet organe de coupe (18). L'arbre d'entraînement (63) est dans l'exemple représenté, composé par trois parties : une partie supérieure (65), une partie intermédiaire (66) et une partie inférieure (67). Ces trois parties (65, 66, 67) de l'arbre d'entraînement (63) sont liées entre elles par deux accouplements élastiques (68, 69). La partie supérieure (65) de l'arbre d'entraînement (63), à l'extrémité supérieure de laquelle est liée en rotation la roue dentée conique (62), est guidée en rotation dans le carter de renvoi (58) au moyen de deux roulements 70. A son extrémité inférieure, la partie supérieure (65) de l'arbre d'entraînement (63) est liée en rotation à un flasque d'entraînement (71) qui est lui-même fixé à l'accouplement élastique (68). La partie intermédiaire (66) de l'arbre d'entraînement (63) quant à elle, est liée en rotation à son extrémité supérieure à un premier entraîneur (72) et à son extrémité inférieure à un second entraîneur (73). Le premier entraîneur (72) est fixé à l'accouplement (68), tandis que le second entraîneur (73) est fixé à l'accouplement (69). La partie inférieure (67) de l'arbre d'entraînement (63) est guidée en rotation dans un palier (74) à l'aide de roulements (75), ledit palier (74) étant fixé à la partie supérieure du carter (51).

A son extrémité supérieure, la partie inférieure (67) de l'arbre d'entraînement (63) est liée en rotation un moyeu (76) solidaire de l'organe de coupe (18) et d'une partie du rotor (26). Ce moyeu (76) est par ailleurs fixé à l'accouplement élastique (69). A son extrémité inférieure, la partie inférieure (67) de l'arbre d'entraînement (63) est liée en rotation à des organes d'entraînement supplémentaires connus de l'homme de l'art et s'étendant à l'intérieur du carter (51), tels que des roues dentées cylindriques par exemple engrenant les unes avec les autres, en vue de l'entraînement des autres organes de coupe (19, 20).

Sur la figure 4, on voit que le rotor (26) se compose de deux demi-rotors (77, 78). Le demi-rotor supérieur (77) est fixé au flasque (71), tandis que le demi-rotor inférieur (78) est fixé à l'organe de coupe (18). A sa partie supérieure, le demi-rotor inférieur (78) est muni d'une paroi cylindrique (79) qui s'étend quelque peu à l'intérieur de la partie inférieure du demi-rotor supérieur (77) et qui a un diamètre extérieur légèrement inférieur au diamètre intérieur de la partie inférieure du demi-rotor supérieur (77). A sa partie supérieure le demi-rotor inférieur (78) est également muni d'une partie annulaire (80) qui est raccordée à la partie inférieure de la paroi cylindrique (79) et qui a un diamètre extérieur plus grand que le diamètre extérieur du reste du demi-rotor inférieur (78) et du demi-rotor supérieur (77). Le demi-rotor supérieur (77) comporte également à sa partie supérieure une paroi annulaire (81) ayant un diamètre extérieur sensiblement égal au diamètre extérieur de la paroi annulaire (80).

Comme dit plus haut, l'organe de coupe (18), le rotor (26) qui le surmonte et l'arbre d'entraînement (63) qui s'étend en partie à l'intérieur du rotor (26), tournent autour de l'axe (64) dirigé vers le haut. L'arbre intermédiaire (56) et les roues dentées coniques (55, 61) quant à eux tournent autour de l'axe longitudinal (82) du bras (43). Ces deux axes (64 et 82) se coupent au point (83) qui est le sommet du couple de roues dentées coniques (61, 62) s'étendant dans le carter de renvoi (58).

Sur la figure 4, on voit aussi que l'axe (5) de l'articulation (4) s'étend à une distance (84) de l'axe de rotation (64) de l'organe de coupe (18) en direction du véhicule tracteur (7) et à une distance (85) plus bas que le sommet (83) du couple de roues dentées coniques (61, 62) aménagées dans le carter de renvoi (58). En sus, on voit que l'axe (5) s'étend sensiblement à mi-distance entre l'organe de coupe (18) et le sommet (83) du couple de roues dentées coniques (61, 62), et approximativement au même niveau que la paroi annulaire (81) du rotor (26).

La faucheuse (1) qui vient d'être décrite fonctionne de la manière suivante :

Son dispositif d'attelage (8) est accouplé au dispositif d'attelage du véhicule tracteur (7) et l'arbre de transmission à cardans (non représenté) qui est lié en rotation à l'une de ses extrémités à la poulie (14), est accouplé à la prise de force (non représentée) du véhicule tracteur (7).

Au travail, le véhicule tracteur (7) déplace la faucheuse (1) dans le sens d'avance (6) et sa prise de force entraîne en rotation les organes de coupe (18, 19, 20) et le rotor (26) surmontant l'organe de coupe (18), par l'intermédiaire des organes de transmission (13) et des divers organes d'entraînement qui ont été décrits. En tournant, les organes de coupe (18, 19, 20) coupent le produit à récolter qui se trouve dans la zone de coupe (42). Comme l'arbre d'entraînement (63) s'étend en grande partie à l'intérieur du rotor (26), tout risque d'accrochage de produit coupé à l'arbre d'entraînement (63) est éliminé.

En sus, comme le pied (40) ainsi qu'une grande partie de la jambe (39) de l'organe support (22) s'étendent à l'intérieur de la zone de coupe (42), tout risque d'accrochage de produit coupé à l'organe support (22) est également éliminé, ceci d'autant plus que le rotor (26) déplace le produit coupé par l'organe de coupe (18) en direction de la partie médiane du groupe de fauche (2). Du côté de l'organe de coupe extérieur (20), l'organe de liaison (25), grâce à son arête frontale (86) inclinée vers l'arrière et vers le bas, sépare bien le produit coupé par l'organe de coupe (20) du produit encore sur pied.

Etant donné que le bras-support (9) peut pivoter d'une certaine valeur par rapport au dispositif d'attelage (8) et que le groupe de fauche (2) peut pivoter d'une certaine valeur par rapport au bras-support (9), ledit groupe de fauche (2) peut bien s'adapter à la configuration du terrain à faucher. L'organe de délestage (28) quant à lui, réduit la force avec laquelle le groupe de fauche (2) repose sur le sol et ceci aussi bien au niveau de l'organe de coupe (18) que de l'organe de coupe (20). Ceci résulte en effet du fait que le point d'accrochage — c'est-à-dire l'axe (34) — de l'organe de délestage (28) est situé sur le groupe de fauche (2) de telle sorte à créer un couple de rappel dirigé dans le sens contraire des aiguilles d'une montre lorsqu'on regarde la faucheuse (1) de l'arrière dans le sens d'avance (6).

Au transport (voir figure 5), on actionne tout d'abord le dispositif d'attelage du véhicule tracteur (7), ce qui a pour effet de lever la faucheuse (1) dès l'instant où l'organe de limitation de débattement (12) stoppe le pivotement du bras-support (9) vers le bas autour de l'axe (10). On actionne ensuite l'organe de manoeuvre (27), ce qui provoque le pivotement du groupe de fauche (2) vers le haut autour de l'articulation (4). La position de transport est atteinte lorsque le groupe de fauche (2) occupe sensiblement une position verticale. Comme l'axe (5) de l'articulation (4) s'étend au travail à une distance (85) plus bas que le sommet (83) du couple de roues dentées coniques (61, 62) et est déporté d'une distance (84) par rapport à l'axe de rotation (64) de l'organe de coupe (18) en direction du véhicule tracteur (7), on voit qu'en position de transport, le groupe de fauche (2) ne s'étend que d'une distance (87) relativement modérée au-delà de la roue arrière du véhicule tracteur (7) située du même côté que le groupe de fauche (2) et ceci bien que la faucheuse (1) soit une faucheuse à entraînement direct. Cela présente de nombreux avantages comme décrit ci-dessus.

Diverses modifications peuvent être apportées à l'exemple de réalisation décrit sans qu'on ne sorte pour autant du cadre de la présente invention telle que définie par les revendications.

## Revendications

1. Faucheuse (1) comportant un châssis (3) permettant d'atteler ladite faucheuse à un véhicule tracteur (7) et un groupe de fauche (2) lié audit châssis (3) par une articulation (4) d'axe (5) dirigé sensiblement suivant la direction d'avance (6), ledit groupe de fauche (2) étant muni d'au moins un organe de coupe (18, 19, 20) et d'au moins un rotor (26) agencé près de l'extrémité dudit groupe de fauche (2) où celui-ci est lié audit châssis (3), ledit rotor (26) s'étendant en partie au moins au-dessus d'une partie dudit ou desdits organes de coupe (18, 19, 20) et tournant autour d'un premier axe (64) dirigé vers le haut, ladite faucheuse (1) comportant également des organes d'entraînement du ou desdits organes de coupe (18, 19, 20) et du rotor (26) comprenant notamment un arbre d'entraînement (63) en au moins une partie pénétrant dans ledit rotor (26) et tournant sensiblement autour du premier axe (64), et un couple de roues dentées coniques (61, 62) agencé au sommet de l'arbre d'entraînement (63), la première roue dentée (62) ayant pour axe de rotation le premier axe (64) la deuxième roue dentée (61) ayant pour axe de rotation un deuxième axe (82), ladite faucheuse comportant par ailleurs un organe de manoeuvre (27) permettant par pivotement autour de l'articulation (4) d'axe (5) dirigé sensiblement dans la direction d'avance (6) d'amener le groupe de fauche (2) dans une position de transport dans laquelle le groupe de fauche (2) est dirigé vers le haut, caractérisée par le fait que l'axe (5) de l'articulation (4) liant le groupe de fauche (2) au châssis (3) s'étend plus bas que le sommet (83) du couple de roues dentées coniques (61, 62) défini par l'intersection dudit premier axe (64) et dudit deuxième axe (82).

2. Faucheuse selon la revendication 1, caractérisée par le fait que l'axe (5) de l'articulation (4) liant le groupe de fauche (2) au châssis (3) est en sus déporté vers le véhicule tracteur (7).

3. Faucheuse selon la revendication 2, caractérisée par le fait que l'axe (5) de l'articulation (4) liant le groupe de fauche (2) au châssis (3) s'étend à côté du rotor (26).

4. Faucheuse selon l'une au moins des revendications 2 ou 3, caractérisée par le fait que l'axe (5) de l'articulation (4) liant le groupe de fauche (2) au châssis (3) et agencé de façon à s'étendre faucheuse (1) vue dans la direction d'avance (6), sensiblement au niveau de la partie extérieure des roues du véhicule tracteur (7) s'étendant en regard du groupe de fauche (2) lorsque ladite faucheuse est attelée au tracteur.

5. Faucheuse selon l'une au moins des revendications 1 à 4, caractérisée par le fait que l'axe (5) de l'articulation (4) liant le groupe de fauche (2) au châssis (3) s'étend sensiblement à mi-distance entre l'organe de coupe (18) au-dessus duquel s'étend au moins partiellement le rotor (26) et le centre (83) du couple de roues dentées coniques (61, 62) agencé au sommet de l'arbre d'entraînement (63) traversant le rotor (26).

6. Faucheuse selon l'une au moins des revendications 1 à 5, caractérisée par le fait que l'axe (5) de l'articulation (4) liant le groupe de fauche (2) au châssis (3) s'étend sensiblement au même niveau que la partie supérieure du rotor (26).

7. Faucheuse selon l'une au moins des revendications 1 à 6, caractérisée par le fait qu'à l'extrémité du groupe de fauche (2) où celui-ci est lié au châssis (3), le groupe de fauche (2) est muni d'un organe support (22) par l'intermédiaire duquel le groupe de fauche (2) est lié au châssis (3), ledit organe support (22) comportant un palier (53, 37, 38) définissant l'articulation (4), une jambe (39) s'étendant à partir de ce palier (53, 37, 38) vers le bas et liée à son pied (40) à un organe porteur inférieur (23) du groupe de fauche (2), et un bras (43) s'étendant à partir du palier (53, 37, 38) vers le haut et lié à sa partie supérieure à un carter de renvoi (58) dans lequel s'étend le couple de roues dentées coniques (61, 62) agencé au sommet de l'arbre d'entraînement (63).

8. Faucheuse selon la revendication 7, caractérisée par le fait que le pied (40) de la jambe (39) de l'organe support (22) s'étend à l'intérieur de la zone de coupe (42).

9. Faucheuse selon la revendication 8, caractérisée par le fait que le pied (40) de la jambe (39) s'étend derrière le ou lesdits organes de coupe (18, 19, 20).

10. Faucheuse selon la revendication 9, caractérisée par le fait que le pied (40) de la jambe (39) s'étend derrière l'organe de coupe (18) au-dessus duquel s'étend en partie au moins le rotor (26).

11. Faucheuse selon l'une au moins des revendications 7 à 10, caractérisée par le fait qu'en vue de dessus, le palier (53, 37, 38) s'étend devant le pied (40) de la jambe (39).

12. Faucheuse selon l'une au moins des revendications 7 à 11, caractérisée par le fait que le palier (53, 37, 38) s'étend, faucheuse (1) vue dans la direction d'avance (6), à côté du rotor (26) en direction du véhicule tracteur (7).

13. Faucheuse selon la revendication 12, caractérisée par le fait que le palier (53, 37, 38) s'étend sensiblement symétriquement par rapport au plan vertical longitudinal (41) du groupe de fauche (2).

14. Faucheuse selon l'une au moins des revendications 7 à 13, caractérisée par le fait que le palier (53, 37, 38) s'étend, en vue de dessus, pour l'essentiel en dehors de la zone de coupe (42).

15. Faucheuse selon l'une au moins des revendications 7 à 14, caractérisée par le fait que la jambe (39) s'étend en grande partie à l'intérieur de la zone de coupe (42).

16. Faucheuse selon l'une au moins des revendications 7 à 15, caractérisée par le fait que la jambe (39) s'étend en vue de dessus en partie au moins au-dessus de l'organe de coupe (18) et à côté du rotor (26) surmontant cet organe de coupe (18).

17. Faucheuse selon l'une au moins des revendications 7 à 16, caractérisée par le fait que la jambe (39) s'étend à partir du palier (53, 37, 38) vers le bas et vers l'arrière.

18. Faucheuse selon l'une au moins des revendications 7 à 17, caractérisée par le fait que la jambe (39) s'étend à partir du palier (53, 37, 38) en partie au moins vers la partie médiane du groupe de fauche (2).

19. Faucheuse selon l'une au moins des revendications 7 à 18, caractérisée par le fait que le bras (43) s'étend en direction de la partie médiane du groupe de fauche (2).

20. Faucheuse selon l'une au moins des revendications 7 à 19, caractérisée par le fait que les organes d'entraînement comportent en sus un arbre (52) guidé en rotation dans le palier (53) de l'organe-support (22) et tournant autour de l'axe (5) de l'articulation (4), un autre couple de roues dentées coniques (54, 55) lié en rotation audit arbre (52) et un arbre intermédiaire (56) lié en rotation à cet autre couple de roues dentées coniques (54, 55) et au couple de roues dentées coniques (61, 62) agencé au sommet de l'arbre d'entraînement (63).

21. Faucheuse selon la revendication 20, caractérisée par le fait que l'arbre intermédiaire (56) s'étend à l'intérieur du bras (43) de l'organe-support (22).

22. Faucheuse selon l'une au moins des revendications 7 à 21, caractérisée par le fait que le bras (43) et le carter de renvoi (58) sont formés par une seule pièce qui est liée de manière démontable au palier (53) de l'organe support (22).

23. Faucheuse selon la revendication 22, caractérisée par le fait que le bras (43) est centré par rapport au palier (53) au moyen d'une bague de centrage (60).

24. Faucheuse selon l'une au moins des revendications 7 à 23, caractérisée par le fait que l'organe-support (22) est lié à un organe porteur supérieur (24) du groupe de fauche (2), ledit organe porteur supérieur (24) étant lié à l'autre extrémité dudit groupe de fauche (2) à l'organe porteur inférieur (23) au moyen d'un organe de liaison (25).

25. Faucheuse selon l'une au moins des revendications 7 à 24, caractérisée par le fait que l'organe de manoeuvre (27) est lié d'une part au châssis (3) et d'autre part à l'organe-support (22), la liaison à l'organe-support (22) se faisant au moyen d'un levier (31) lié de manière articulée à l'organe de manoeuvre (27) et à l'organe-support (22), le pivotement du levier (31) par rapport à l'organe-support (22) étant limité en direction du véhicule tracteur (7) par une butée (47).

26. Faucheuse selon l'une au moins des revendications 7 à 25, caractérisée par le fait que le groupe de fauche (2) comporte une barre de coupe (17) munie dudit organe de coupe ou d'une partie au moins desdits organes de coupe (18, 19, 20), ladite barre de coupe (17) étant portée par la structure porteuse composée au moins par l'organe-support (22) et l'organe porteur inférieur (23).

27. Faucheuse selon l'une au moins des revendications 7 à 26, caractérisée par le fait que l'organe porteur inférieur (23) du groupe de fauche (2) comporte un raidisseur (50).

28. Faucheuse selon l'une au moins des revendications 1 à 27, caractérisée par le fait que l'arbre d'entraînement (63) est réalisé en plusieurs parties (65, 66, 67) liées entre elles au moyen d'accouplements (68, 69).

29. Faucheuse selon l'une au moins des revendications 1 à 28, caractérisée par le fait que les organes de coupe sont constitués par des disques (18, 19, 20) tournant autour d'axes dirigés vers le haut, le rotor (26) surmontant le disque (18) s'étendant à l'extrémité du groupe de fauche (2) où celui-ci est lié au châssis (3), l'axe de rotation du rotor (26) et l'axe de rotation de ce disque (18) étant confondus.

30. Faucheuse selon l'une au moins des revendications 1 à 29, caractérisée par le fait que le rotor (26) est formé par deux demi-rotors (77, 78), le demi-rotor supérieur (77) étant lié à l'arbre d'entraînement (63) et le demi-rotor inférieur (78) à l'organe de coupe (18).

**Patentansprüche**

1. Mähmaschine (1) mit einem Gestell (3), das die Kupplung der Mähmaschine an einen Schlepper (7) ermöglicht, und einer mit dem Gestell (3) über ein Gelenk (4) mit im wesentlichen in Fortbewegungsrichtung (6) gerichteter Achse (5) verbundenen Mähergruppe (2), welche Mähergruppe (2) mit zumindest einem Schneidorgan (18, 19, 20) und zumindest einem nahe dem Ende der Mähergruppe (2), wo sie mit dem Gestell (3) verbunden ist, angeordneten Rotor (26) ausgestattet ist, welcher Rotor (26) zumindest teilweise über einen Teil des oder der Schneidorgane (18, 19, 20) angeordnet ist und sich um eine erste aufrechtstehende Achse (64) dreht, welche Mähmaschine (1) auch Antriebsorgane für das oder die Schneidorgane (18, 19, 20) und den Rotor (26) aufweist, umfassend insbesondere eine aus mindestens einem Teil gebildete Antriebswelle (63), die in den Rotor (26) ragt und im wesentlichen um die erste Achse (64) rotiert, und ein Paar Kegelräder (61, 62), die am Scheitel der Antriebswelle (63) angeordnet sind, wobei das erste Zahnrad (62) die erste Achse (64) als Rotationsachse hat und das zweite Zahnrad (61) eine zweite Achse (82) als Rotationsachse hat, welche Mähmaschine ausserdem ein Betätigungsorgan (27) aufweist, das es durch Schwenken um das Gelenk (4) mit der im wesentlichen in Fortbewegungsrichtung (6) ausgerichteten Achse (5) ermöglicht, die Mähergruppe (2) in eine Transportstellung zu bringen, in welcher die Mähergruppe (2) aufrechtsteht, dadurch gekennzeichnet, dass sich die Achse (5) des die Mähergruppe (2) mit dem Gestell (3) verbindenden Gelenks (4) weiter unten erstreckt als der Scheitel (83) des Kegelradpaares (61, 62), der durch den Schnittpunkt der ersten Achse (64) und der zweiten Achse (82) definiert ist.

2. Mähmaschine nach Anspruch 1, dadurch gekennzeichnet, dass die Achse (5) des die Mähergruppe (2) mit dem Gestell (3) verbindenden Gelenks (4) ausserdem zum Schleppfahrzeug (7) hin versetzt ist.

3. Mähmaschine nach Anspruch 2, dadurch gekennzeichnet, dass sich die Achse (5) des die Mähergruppe (2) mit dem Gestell (3) verbindenden Gelenks (4) neben dem Rotor (26) erstreckt.

4. Mähmaschine nach zumindest einem der Ansprüche 2 oder 3, dadurch gekennzeichnet, dass die Achse (5) des die Mähergruppe (2) mit dem Gestell (3) verbindenden Gelenks (4) derart angeordnet ist, dass sie sich bei Betrachtung der Mähmaschine (1) in Fortbewegungsrichtung (6) im wesentlichen auf dem Niveau des Aussenteils der auf der Seite der Mähergruppe (2) angeordneten Räder des Schleppfahrzeugs (7) erstreckt, wenn die Mähmaschine an das Schleppfahrzeug gekuppelt ist.

5. Mähmaschine nach zumindest einem der Ansprüche 1 bis 4, dadurch gekennzeichnet, dass sich die Achse (5) des die Mähergruppe (2) mit dem Gestell (3) verbindenden Gelenks (4) im wesentlichen auf halber Distanz zwischen dem Schneidorgan (18), über dem sich zumindest teilweise der Rotor (26) erstreckt, und dem Zentrum (83) des am Scheitel der den Rotor (26) durchsetzenden Antriebswelle (63) angeordneten Kegelradpaares (61, 62) erstreckt.

6. Mähmaschine nach zumindest einem der Ansprüche 1 bis 5, dadurch gekennzeichnet, dass sich die Achse (5) des die Mähergruppe (2) mit dem Gestell (3) verbindenden Gelenks (4) im wesentlichen auf demselben Niveau wie der Oberteil des Rotors (26) erstreckt.

7. Mähmaschine nach zumindest einem der Ansprüche 1 bis 6, dadurch gekennzeichnet, dass die Mähergruppe (2) an dem Ende, wo sie mit dem Gestell (3) verbunden ist, mit einem Stützorgan (22) versehen ist, über das die Mähergruppe (2) mit dem Gestell (3) verbunden ist, wobei das Stützorgan (22) ein das Gelenk (4) definierendes Lager (53, 37, 38) umfasst, wobei sich von diesem Lager (53, 37, 38) ein Schenkel (39), mit dessen Fuss (40) ein unteres Trägerorgan (23) der Mähergruppe (2) verbunden ist, nach unten erstreckt, und wobei sich von diesem Lager (53, 37, 38) ebenfalls ein Arm (43), der an seinem oberen Ende mit einem Getriebegehäuse (58), in welchem das auf dem Scheitel der Antriebswelle (63) angeordnete Kegelradpaar (61, 62) angeordnet ist, verbunden ist, nach oben erstreckt.

8. Mähmaschine nach Anspruch 7, dadurch gekennzeichnet, dass der Fuss (40) des Schenkels (39) des Stützorgans (22) sich innerhalb der Schneidzone (42) erstreckt.

9. Mähmaschine nach Anspruch 8, dadurch gekennzeichnet, dass der Fuss (40) des Schenkels (39) sich hinter dem oder den Schneidorgane (18, 19, 20) erstreckt.

10. Mähmaschine nach Anspruch 9, dadurch gekennzeichnet, dass der Fuss (40) des Schenkels (39) sich hinter dem Schneidorgan (18) erstreckt, über dem sich zumindest teilweise der Rotor (26) erstreckt.

11. Mähmaschine nach zumindest einem der Ansprüche 7 bis 10, dadurch gekennzeichnet, dass sich das Lager (53, 37, 38) in Draufsicht vor dem Fuss (40) des Schenkels (39) erstreckt.

12. Mähmaschine nach zumindest einem der Ansprüche 7 bis 11, dadurch gekennzeichnet, dass sich das Lager (53, 37, 38) bei Betrachtung der Mähmaschine (1) in Fortbewegungsrichtung (6) neben dem Rotor (26) in Richtung des Schleppfahrzeugs (7) erstreckt.

13. Mähmaschine nach Anspruch 12, dadurch gekennzeichnet, dass sich das Lager (53, 37, 38) im wesentlichen symmetrisch in bezug auf die vertikale Längsebene (41) der Mähergruppe (2) erstreckt.

14. Mähmaschine nach zumindest einem der Ansprüche 7 bis 13, dadurch gekennzeichnet, dass sich das Lager (53, 37, 38) in Draufsicht im wesentlichen ausserhalb der Schneidzone (42) befindet.

15. Mähmaschine nach zumindest einem der Ansprüche 7 bis 14, dadurch gekennzeichnet, dass der Schenkel (39) zum Grossteil ins Innere der Schneidzone (42) ragt.

16. Mähmaschine nach zumindest einem der Ansprüche 7 bis 15, dadurch gekennzeichnet, dass sich der Schenkel (39) in Draufsicht zumindest teilweise oberhalb des Schneidorgans (18) und neben dem über diesem Schneidorgan (18) befindlichen Rotor (26) erstreckt.

17. Mähmaschine nach zumindest einem der Ansprüche 7 bis 16, dadurch gekennzeichnet, dass sich der Schenkel (39) von dem Lager (53, 37, 38) aus nach unten und nach hinten erstreckt.

18. Mähmaschine nach zumindest einem der Ansprüche 7 bis 17, dadurch gekennzeichnet, dass der Schenkel (39) aus dem Lager (53, 37, 38) zumindest teilweise zum Mittelteil der Mähergruppe (2) ragt.

19. Mähmaschine nach zumindest einem der Ansprüche 7 bis 18, dadurch gekennzeichnet, dass der Arm (43) in Richtung des Mittelteils der Mähergruppe (2) ragt.

20. Mähmaschine nach zumindest einem der Ansprüche 7 bis 19, dadurch gekennzeichnet, dass die Antriebsorgane ausserdem eine Welle (52), die drehbar im Lager (53) des Stützorgans (22) geführt ist und um die Achse (5) des Gelenks (4) rotiert, ein anderes Kegelradpaar (54, 55), das drehbar mit der Welle (52) verbunden ist, und eine Zwischenwelle (56), die drehbar mit diesem anderen Kegelradpaar (54, 55) und dem am Scheitel der Antriebswelle (63) angeordneten Kegelradpaar (61, 62) verbunden ist, umfassen.

21. Mähmaschine nach Anspruch 20, dadurch gekennzeichnet, dass die Zwischenwelle (56) sich innerhalb dem Arm (43) des Stützorganes (22) erstreckt.

22. Mähmaschine nach zumindest einem der Ansprüche 7 bis 21, dadurch gekennzeichnet, dass der Arm (43) und das Getriebegehäuse (58) aus einem einzigen Stück gebildet sind, das lösbar mit dem tiger (53) des Stützorgans (22) verbunden ist.

23. Mähmaschine nach Anspruch 22, dadurch gekennzeichnet, dass der Arm (43) in bezug auf das Lager (53) mittels eines Zentrierringes (60) zentriert ist.

24. Mähmaschine nach zumindest einem der Ansprüche 7 bis 23, dadurch gekennzeichnet, dass das Stützorgan (22) mit einem oberen Tragorgan (24) der Mähergruppe (2) verbunden ist, welches obere Tragorgan (24) am anderen Ende der Mähergruppe (2) mit dem unteren Tragorgan (23) mittels eines Verbindungsorgans (25) verbunden ist.

25. Mähmaschine nach zumindest einem der Ansprüche 7 bis 24, dadurch gekennzeichnet, dass das Betätigungsorgan (27) einerseits mit dem Gestell (3) und anderseits mit dem Stützorgan (22) verbunden ist, wobei die Verbindung mit dem Stützorgan (22) über einen Hebel (31) erfolgt, der mit dem Betätigungsorgan (27) und dem Stützorgan (22) gelenkig verbunden ist, wobei die Schwenkbewegung des Hebels (31) in bezug auf das Stützorgan (22) in Richtung des Schleppfahrzeugs (7) durch einen Anschlag (47) begrenzt ist.

26. Mähmaschine nach zumindest einem der Ansprüche 7 bis 25, dadurch gekennzeichnet, dass die Mähergruppe (2) einen mit dem Schneidorgan oder zumindest einige der Schneidorgane (18, 19, 20) versehenen Mähbalken (17) umfasst, der von der zumindest aus dem Stützorgan (22) und dem unteren Tragorgan (23) bestehenden Stützkonstruktion gehalten ist.

27. Mähmaschine nach zumindest einem der Ansprüche 7 bis 26, dadurch gekennzeichnet, dass das untere Tragorgan (23) der Mähergruppe (2) eine Versteifung (50) aufweist.

28. Mähmaschine nach zumindest einem der Ansprüche 1 bis 27, dadurch gekennzeichnet, dass die Antriebswelle (63) aus mehreren Teilen (65, 66, 67) zusammengesetzt ist, die miteinander durch Kupplungen (68, 69) verbunden sind.

29. Mähmaschine nach zumindest einem der Ansprüche 1 bis 28, dadurch gekennzeichnet, dass die Schneidorgane aus Scheiben (18, 19, 20) bestehen, die um aufrechtstehende Achsen rotieren, wobei sich der Rotor (26) über der an dem Ende der Mähergruppe (2), wo sie mit dem Gestell (3) verbunden ist, befindlichen Scheibe (18) befindet und die Rotationsachse des Rotors (26) und die Rotationsachse dieser Scheibe (18) zusammenfallen.

30. Mähmaschine nach zumindest einem der Ansprüche 1 bis 29, dadurch gekennzeichnet, dass der Rotor (26) aus zwei Halbrotoren (77, 78) gebildet ist, wobei der obere Halbrotor (77) mit der Antriebswelle (63) und der untere Halbrotor (78) mit dem Schneidorgan (18) verbunden ist.

## Claims

1. A mower (1) comprising a chassis (3) allowing said mower to be hitched to a towing vehicle (7) and a mower unit (2) joined to said chassis (3) by an articulation (4) of axis (5) directed approximately in the forward direction (6), said mower unit (2) being equipped with at least one cutter member (18, 19, 20) and at least one rotor (26) placed near the end of said mower unit (2) where this is joined to said chassis (3), said rotor (26) extending in part at least above one part of said cutter member or members (18, 19, 20) and turning about a first axis (64) directed upwards, said mower (1) also comprising drive elements for the cutter member or members (18, 19, 20) and the rotor (26) comprising in particular a drive shaft (63) in at least one part penetrating into the said rotor (26) and turning approximately around the first axis (64), and a pair of bevel gears (61, 62) placed at the top of the drive shaft (63), the first bevel gear (62) having as its rotation axis the first axis (64), the second bevel gear (61) having as its rotation axis a second axis (82), said mower comprising moreover a manoeuvring device (27) allowing the arrangement of the mower unit (2) into a transport position in which the mower unit (2) is directed upwardly, by pivoting about the articulation (4) whose axis (5) is directed approximately in the forward direction (6), characterised in that the axis (5) of the articulation (4) joining the mower unit (2) to the chassis (3) extends lower as the top (83) of the pair of bevel gears (61, 62) defined by the intersection of said first axis (64) and said second axis (82).

2. A mower according to claim 1, characterised in that the axis (5) of the articulation (4) joining the mower unit (2) to the chassis (3) is in addition displaced towards the towing vehicle (7).

3. A mower according to claim 2, characterised in that the axis (5) of the articulation (4) joining the mower unit (2) to the chassis (3) extends beside the rotor (26).

4. A mower according to at least one of claims 2 or 3, characterised in that the axis (5) of the articulation (4) joining the mower unit (2) to the chassis (3) is arranged in such a way as to extend, with the mower (1) seen in the forward direction (6), approximately in the region of the outer part of the wheels of the towing vehicle (7) extending opposite the mower unit (2) when said mower is hitched to the tractor.

5. A mower according to at least one of the claims 1 to 4, characterised in that the axis (5) of the articulation (4) joining the mower unit (2) to the chassis (3) extends approximately half way between the cutter member (18) above which the rotor (26) at least partially extends and the centre (83) of the pair of bevel gears (61, 62) arranged at the top of the drive shaft (63) crossing the rotor (26).

6. A mower according to at least one of claims 1 to 5, characterised in that the axis (5) of the articulation (4) joining the mower unit (2) to the chassis (3) extends approximately to the same level as the upper part of the rotor (26).

7. A mower according to at least one of claims 1 to 6, characterised in that at the end of the mower unit (2) where this is joined to the chassis (3), the mower unit (2) is equipped with a support component (22) by means of which the mower unit (2) is connected to the chassis (3), said support component (22) comprising a bearing (53, 37, 38) defining the articulation (4), a leg (39) extending downwards from this bearing (53, 37, 38) and joined at its foot (40) to a lower carrying element (23) of the mower unit (2), and an arm (43) extending upwards from the bearing (53, 37, 38) and joined at its upper part to a casing (58) in which the pair of bevel gears (61, 62) arranged at the top of the drive shaft (63) extends.

8. A mower according to claim 7, characterised in that the foot (40) of the leg (39) of the support component (22) extends inside the cutting zone (42).

9. A mower according to claim 8, characterised in that the foot (40) of the leg (39) extends behind said cutter member or members (18, 19, 20).

10. A mower according to claim 9, characterised in that the foot (40) of the leg (39) extends behind the cutter member (18) above which the rotor (26) at least in part extends.

11. A mower according to at least one of claims 7 to 10, characterised in that seen from above, the bearing (53, 37, 38) extends in front of the foot (40) of the leg (39).

12. A mower according to at least one of claims 7 to 11, characterised in that the bearing (53, 37, 38), with the mower (1) seen in the forward direction (6), extends beside the rotor (26) in the direction of the towing vehicle (7).

13. A mower according to claim 12, characterised in that the bearing (53, 37, 38) extends approximately symmetrically in relation to the longitudinal vertical plane (41) of the mower unit (2).

14. A mower according to at least one of claims 7 to 13, characterised in that the bearing (53, 37, 38), seen from above, extends for the main part outside the cutting zone (42).

15. A mower according to at least one of claims 7 to 14, characterised in that the leg (39) extends to a large extent inside the cutting zone (42).

16. A mower according to at least one of claims 7 to 15, characterised in that the leg (39), seen from above, extends in part at least above the cutter member (18) and beside the rotor (26) surmounting this cutter member (18).

17. A mower according to at least one of claims 7 to 16, characterised in that the leg (39) extends downwards and backwards from the bearing (53, 37, 38).

18. A mower according to at least one of claims 7 to 17, characterised in that the leg (39) extends from the bearing (53, 37, 38) in part at least towards the middle part of the mower unit (2).

19. A mower according to at least one of claims 7 to 18, characterised in that the arm (43) extends in the direction of the middle part of the mower unit (2).

20. A mower according to at least one of claims 7 to 19, characterised in that the drive elements further comprise a shaft (52) guided in rotation in the bearing (53) of the support component (22) and turning about the axis (5) of the articulation (4), another pair of bevel gears (54, 55) joined in rotation to said shaft (52) and an intermediary shaft (56) joined in rotation to this other pair of bevel gears (54, 55) and to the pair of bevel gears (61, 62) arranged at the top of the drive shaft (63).

21. A mower according to claim 20, characterised in that the intermediary shaft (56) extends inside the arm (43) of the support component (22).

22. A mower according to at least one of claims 7 to 21, characterised in that the arm (43) and the casing (58) are formed from one single piece which is joined to the bearing (53) of the support component (22) in such a way that it may be dismantled.

23. A mower according to claim 22, characterised in that the arm (43) is centred in relation to the bearing (53) by means of a centring ring (60).

24. A mower according to at least one of claims 7 to 23, characterised in that the support component (22) is joined to an upper carrying element (24) of the mower unit (2), said upper carrying element (24) being joined at the other end of said mower unit (2) to the lower carrying element (23) by means of a connecting element (25).

25. A mower according to at least one of claims 7 to 24, characterised in that the manoeuvring device (27) is joined on one hand to the chassis (3) and on the other hand to the support component (22), the connection to the support component (22) being effected by means of a lever (31) joined in an articulated manner to the manoeuvring device (27) and to the support component (22), the pivoting of the lever (31) in relation to the support component (22) being restricted in the direction of the towing vehicle (7) by a stop (47).

26. A mower according to at least one of claims 7 to 25, characterised in that the mower unit (2) comprises a cutter bar (17) equipped with said cutter member or at least with some of said cutter members (18, 19, 20), said cutter bar (17) being carried by the carrying structure made up at least by the support component (22) and the lower carrying element (23).

27. A mower according to at least one of claims 7 to 26, characterised in that the lower carrying element (23) of the mower unit (2) includes a stiffener (50).

28. A mower according to at least one of claims 1 to 27, characterised in that the drive shaft (63) is manufactured in several parts (65, 66, 67) joined together by means of couplings (68, 69).

29. A mower according to at least one of claims 1 to 28, characterised in that the cutter members are made up of discs (18, 19, 20) turning about upwardly directed axes, the rotor (26) surmounting the disc (18) extending at the end of the mower unit (2) where this is joined to the chassis (3), the axis of rotation of the rotor (26) and the axis of rotation of this disc (18) being coincident.

30. A mower according to at least one of claims 1 to 29, characterised in that the rotor (26) is formed by two rotor halves (77, 78), the upper rotor half (77) being joined to the drive shaft (63) and the lower rotor half (78) to the cutter member (18).

FIG. 1

FIG 2

FIG.3

FIG.4

# FIG. 5